Europäisches Patentamt

European Patent Office

Office européen des brevets

(11) Veröffentlichungsnummer: **0 170 855 B1**

# EUROPÄISCHE PATENTSCHRIFT

(45) Veröffentlichungstag der Patentschrift: **11.09.91**

(51) Int. Cl.5: **C08G 64/00**, C08G 63/90, //C08F6/00

(21) Anmeldenummer: **85107865.9**

(22) Anmeldetag: **25.06.85**

(54) **Verfahren zum Entfernen von unerwünschten Restbestandteilen, insbesondere niedermolekularen Komponenten, aus Polycarbonaten.**

(30) Priorität: **07.07.84 DE 3425125**

(43) Veröffentlichungstag der Anmeldung:
**12.02.86 Patentblatt 86/07**

(45) Bekanntmachung des Hinweises auf die
Patenterteilung:
**11.09.91 Patentblatt 91/37**

(84) Benannte Vertragsstaaten:
**DE FR GB IT NL**

(56) Entgegenhaltungen:
**EP-A- 68 146**
**US-A- 3 213 060**
**US-A- 3 410 823**
**US-A- 3 668 181**

**D.W. VAN KREVELEN et al., Properties of Polymers (1976) 108**

(73) Patentinhaber: **BAYER AG**

**W-5090 Leverkusen 1 Bayerwerk(DE)**

(72) Erfinder: **Knerr, Manfred, Dr.**
**Gatzenstrasse 8**
**W-4150 Krefeld 1(DE)**

## Beschreibung

Die Erfindung betrifft ein Verfahren zum schonenden Entfernen von unerwünschten Restbestandteilen, insbesondere niedermolekularen Komponenten, aus in fester Form (Granulat) vorliegendem Polycarbonat, unter Zusatz eines das Polycarbonat nicht oder nur geringfügig lösenden flüssigen Extraktionsmittels und Zuführung von Wärme, Abtrennen des mit Restbestandteilen angereicherten Extraktionsmittels und Ausdampfen des verbliebenen Extraktionsmittels zusammen mit den darin noch enthaltenen Restbestandteilen durch die zugeführte Wärme, wobei der diffusive Stofftransport im Polycarbonat durch Aufweitung der Kettenabstände (Quellen) mittels des Extraktionsmittels und durch Anlegen einer Temperatur, welche zwischen der Raum- und Glasübergangstemperatur liegt, geändert und dabei beschleunigt wird.

Für die Weiterverarbeitung und die Anwendung von Polymeren ist es wünschenswert bzw. erforderlich, den Anteil flüchtiger Komponenten auf niedrige Restgehalte abzusenken, um Gesundheitsgefahren zu vermeiden, gesetzliche Auflagen zu erfüllen, Umweltverschmutzung - beispielsweise bei Abluft - zu verringern und die Qualität durch Vermeidung von Blasenbildung bei der Weiterverarbeitung zu verbessern.

Bekannt ist ein Verfahren, bei dem in einer Schneckenmaschine die Polymere geschmolzen werden, so daß die Restbestandteile an Lösungsmitteln über die laufend erneuerte Oberfläche gegebenenfalls unter vermindertem Druck entweichen können.

Der Nachteil bei diesem Verfahren besteht darin, daß eine Schneckenmaschine hinsichtlich Investitions- und Betriebskosten sehr teuer ist. Darüber hinaus kann bei thermisch empfindlichen Produkten schnell eine Qualitätsminderung eintreten, insbesondere dann, wenn lange Verweilzeiten bei hohen Temperaturen zur Erzielung von niedrigen Restgehalten erforderlich sind.

Weiter ist bekannt, die Restbestandteile durch Vergrößerung der Oberfläche - z.B. durch Verwendung kleinerer Teilchengrößen bei der Sprühtrocknung - zu entfernen.

Da beim Ausdampfen von Restbestandteilen des Lösungsmittels die Abreicherung in erster Linie mit der Oberflächenvergrößerung steigt, muß, wenn geringe Werte erzielt werden sollen, hierfür ein hoher technischer Aufwand betrieben werden. Andererseits läßt sich mit zunehmendem Feinheitsgrad der Kunststoff durch den Weiterverarbeiter schlechter handhaben,

In US-A-3 410 823 ist ein Verfahren zum Entfernen von Verunreinigungen aus hochmolekularem Polycarbonat bekannt, wobei das verunreinigte Polycarbonat mit einer für das Polycarbonat inerten, nicht lösenden Flüssigkeit gemischt wird, welche jedoch ein gutes Lösungsmittel für die Verunreinigungen darstellt und wobei die Verunreinigungen mit dem Lösungsmittel abgeführt werden.

Schließlich ist aus EP-A1-0068 146 ein Verfahren zum Entfernen von unerwünschten Restbestandteilen aus in Granulatform vorliegendem Polypropylen bekannt, wobei als Extraktionsmittel Kohlendioxid bei einer Temperatur von 30 bis 40° C und einem Druck von 100 bar verwendet wird.

Aufgabe der Erfindung ist es, ein verbessertes Verfahren zur Reinigung von Polycarbonaten zur Verfügung zu stellen, mit welchem sich unter erschwerten Bedingungen einzusetzende flüssige Extraktionsmittel später unter Umweltbedingungen restlos und in einfacher Weise entfernen lassen.

Die Aufgabe wird dadurch gelöst, daß dieser Vorgang zusätzlich durch Anwendung von erhöhtem Druck unterstützt wird, und daß die Entfernung von Restanteilen an Extraktionsmittel im Polycarbonat durch die Entlastung des Polycarbonats vom Arbeitsdruck auf Umgebungsdruck unterstützt wird.

Für den Fachmann ist es überraschend, daß bei Granulaten keine Produktschädigung auftritt, obgleich beim Quellen sich das Aussehen des Stoffes (beispielsweise bei Polycarbonat von glasklar in milchig weis) ändert und makroskopische Hohlräume (Größenordnung (3 % der Korngröße von 1-3 mm) bis herab zu Mikrorissen, sog. crazes, entstehen können.

Die Diffusion läuft in Gegenwart des Quellmittels um Zehnerpotenzen schneller als bei einer thermisch bedingten Diffusion ab, wodurch die zusätzlichen Kosten von den vorgeschalteten Schritten mehr als aufgewogen sind. Gleichzeitig wird durch die kurze Verweilzeit eine ausgezeichnete Stoffqualität, insbesondere bei thermisch empfindlichen Produkten erzielt. Unter geringfügiger Löslichkeit wird eine Lösung des Polymeren $\leq$ Gew.-% in 24 Stunden verstanden. Der Verfahrensdruck wird mit zunehmender Quelleigenschaft des Extraktionsmittels geringer eingestellt.

Die Temperatur sollte vorzugsweise wegen der Effektivität 5 bis 10° C unter der Glasübergangstemperatur liegen.

In einer besonderen Durchführung des Verfahrens wird durch Quellen eine Zunahme des ursprünglichen Volumens zwischen 1-10 Vol-% eingestellt.

In dem obigen Bereich lassen sich bei geringen Verweilzeiten ohne Produktschädigung gute Ergebnisse erzielen. Die Quellung sollte vorzugsweise 5-10 Vol-% bei einem Druck $\leq$5 bar bzw. 1-5 Vol-% bei größerem Druck betragen.

In einer weiteren Durchführung des Verfahrens wird je nach der gewünschten Abreicherung an unerwünschten Restbestandteilen eine vorgegebene Menge an Extraktionsmitteln mit den Polymeren in Kontakt gebracht.

Durch Erhöhung des Anteils des Extraktionsmittels kann der Restbestandteil auf Werte bis unterhalb der Konzentration des thermischen Gleichgewichts gebracht werden, so daß dieser nicht mehr nachzuweisen ist. Die üblicherweise 2- bis 5-fache Menge kann selbstverständlich auch in diesem Fall kontinuierlich oder chargenweise aufgebracht werden.

In einer anderen Durchführung des Verfahrens wird das Extraktionsmittel mit guten Quelleigenschaften bei geringem Druck ≦5 bar eingesetzt.

Bei guten Quelleigenschaften ist nur ein geringer Druck erforderlich. Eingesetzt wurden beispielsweise Aceton, Methylethylketon, Diethylketon, Toluol und Xylol. Die Quelleigenschaft, aber auch der Aufwand für die spätere Entfernung nimmt in der Reihenfolge der angegebenen Stoffe zu.

In einer Durchführung des Verfahrens wird ein Extraktionsmittel, welches bei Umgebungsbedingungen (~1 bar, ~20°C) keine Quelleigenschaften aufweist, bei erhöhtem Druck und erhöhter Temperatur eingesetzt.

Der Vorteil dieses Verfahrens besteht darin, daß zwar zwecks diffusivem Stofftransport die Extraktionsmittel - z.B. niedrige Alkohole (Ethanol > 3 bar; >110°C) unter erschwerten Bedingungen eingesetzt werden müssen, daß aber andererseits die spätere restlose Entfernung des Extraktionsmittels bei Umweltbedingungen (z.B. durch einfaches Entspannen) wesentlich leichter als bei Extraktionsmitteln mit guten Quelleigenschaften ist.

Die Erfindung wird anhand folgender Beispiele erläutert.

Beispiel

Polycarbonat-Granulat mit einer mittleren Korngröße von 2,8 mm enthält 760 ppm Chlorbenzol als Verunreinigung.

Die Extraktion wird mit Ethanol im Gewichtsverhältnis Ethanol:Granulat = 3:1 unter einem Druck von 14,5 bar durchgeführt. Nach 3-stündiger Behandlung bei 145°C ist der Restgehalt von 750 ppm auf 15 ppm abgesunken.

Vergleichsbeispiel

Die Extraktion wird gemäß dem Beispiel mit Aceton (Gewichtsverhältnis Aceton:Granulat = 3:1) wiederholt, wobei die Temperatur über eine Dauer von 3 h bei 56°C gehalten wird. Der Chlorbenzolgehalt hat aufgrund der Behandlung einmal von 12 500 ppm auf 790 ppm und zum anderen von 790 ppm auf 150 ppm abgenommen.

**Patentansprüche**

1. Verfahren zum schonenden Entfernen von unerwünschten Restbestandteilen, insbesondere niedermolekularen Komponenten, aus in fester Form (Granulat) vorliegendem Polycarbonat, unter Zusatz eines das Polycarbonat nicht oder nur geringfügig lösenden flüssigen Extraktionsmittels und Zuführung von Wärme, Abtrennen des mit Restbestandteilen angereicherten Extraktionsmittels und Ausdampfen des verbliebenen Extraktionsmittels zusammen mit den darin noch enthaltenen Restbestandteilen durch die zugeführte Wärme, wobei der diffusive Stofftransport im Polycarbonat durch Aufweitung der Kettenabstände (Quellen) mittels des Extraktionsmittels und durch Anlegen einer Temperatur, welche zwischen der Raum- und Glasübergangstemperatur liegt, geändert und dabei beschleunigt wird, dadurch gekennzeichnet, daß dieser Vorgang zusätzlich durch Anwendung von erhöhtem Druck unterstützt wird, und daß die Entfernung von Restanteilen an Extraktionsmittel im Polycarbonat durch die Entlastung des Polycarbonats vom Arbeitsdruck auf Umgebungsdruck unterstützt wird.

2. Verfahren nach Anspruch 1, dadurch gekennzeichnet, daß durch Quellen eine Zunahme des ursprünglichen Volumens zwischen 1-10 Vol-% eingestellt wird.

3. Verfahren nach Ansprüchen 1-2, dadurch gekennzeichnet, daß das Extraktionsmittel mit guten Quelleigenschaften bei einem Druck ≦5 bar eingesetzt wird.

4. Verfahren nach Ansprüchen 1-2, dadurch gekennzeichnet, daß das Extraktionsmittel, welches bei Umgebungsbedingungen (~1 bar, ~20°C) keine Quelleigenschaften aufweist, bei erhöhtem Druck und erhöhter Temperatur eingesetzt wird.

**Claims**

1. A process for the gentle removal of unwanted residual constituents, particularly low molecular weight components, from solid (granular) polycarbonate with addition of a liquid extractant which dissolves polycarbonate only slightly, if at all, and application of heat, removal of the extractant enriched with residual constituents and evaporation of the remaining extractant together with the residual constituents still present therein by the heat applied, the diffusive mass transport in the polycarbonate being changed and, at the same time, accelerated by widening of the chain intervals (swelling) under the effect of the extractant and by application of a temperature between ambient temperature and the glass transition temperature, characterized in that this operation is additionally supported by application of elevated pressure and in that the removal of residual extractant in the polycarbonate is supported by the expansion of the polycarbonate from the working pressure to ambient pressure.

2. A process as claimed in claim 1, characterized in that the original volume is increased by 1 to 10% by volume by swelling.

3. A process as claimed in claims 1 and 2, characterized in that the extractant having good swelling properties is used under a pressure of $\leq 5$ bar.

4. A process as claimed in claims 1 and 2, characterized in that the extractant, which has no swelling properties under ambient conditions (~1 bar, ~20° c), is used at elevated temperature and pressure.

**Revendications**

1. Procédé pour l'élimination ménagée de constituants résiduels indésirables, en particulier de composants de bas poids moléculaire, d'un polycarbonate présent sous forme solide (granulat), avec addition d'un agent d'extraction liquide ne dissolvant pas, ou seulement faiblement, le polycarbonate et apport de chaleur, séparation de l'agent d'extraction enrichi en constituants résiduels et évaporation de l'agent d'extraction restant en même temps que les constituants résiduels qu'il contient encore par la chaleur apportée, le transport de matière par diffusion dans le polycarbonate étant modifié et ainsi accéléré par élargissement des distances entre les chaînes (gonflement) au moyen de l'agent d'extraction et par application d'une température qui est comprise entre la température ambiante et la température de transition vitreuse ; caractérisé en ce que ce processus est facilité en outre par application d'une pression élevée et que l'élimination de fractions résiduelles d'agent d'extraction dans le polycarbonate est facilitée par la détente du polycarbonate de la pression de fonctionnement à la pression environnante.

2. Procédé selon la revendication 1, caractérisé en ce qu'il s'établit par gonflement une augmentation du volume initial de 1-10 % en volume.

3. Procédé selon les revendications 1-2, caractérisé en ce que l'agent d'extraction de bonnes propriétés de gonflement est utilisé sous une faible pression $\leq 5$ bars.

4. Procédé selon les revendications 1-2, caractérisé en ce que l'on utilise sous pression et à températures élevées un agent d'extraction qui ne présente pas de propriétés de gonflement dans les conditions environnantes (~ 1 bar, ~ 20° C).